# EUROPEAN PATENT SPECIFICATION

(11) **EP 0 404 568 B1**
(45) Date of publication and mention of the grant of the patent: **16.08.1995**
(21) Application number: 90306791.6
(22) Date of filing: 21.06.1990
(51) Int. Cl.: G02B 21/00, G06T 5/00

(54) **Image processing apparatus**
Vorrichtung zur Bildverarbeitung
Appareil de traitement d'images

(30) Priority: 22.06.1989 JP 160309/89
(43) Date of publication of application: 27.12.1990
(73) Proprietor: HAMAMATSU PHOTONICS K.K., Shizuoka-ken (JP)
(72) Inventor: Kamiya, Kiyoshi, Hamamatsu-shi, Shizuoka-ken (JP); Inuzuka, Eiji, Hamamatsu-shi, Shizuoka-ken (JP); Oshiro, Masahumi, Hamamatsu-shi, Shizuoka-ken (JP); Uchiyama, Shigeru, Hamamatsu-shi, Shizuoka-ken (JP); Suzuki, Koji, Hamamatsu-shi, Shizuoka-ken (JP)
(74) Representative: Rackham, Stephen Neil

(56) References cited:
- EP-A- 0 164 680
- US-A- 4 680 635

## Description

The present invention relates to an image processing apparatus for displaying an accumulated image of very faint light emitted from an object and an image of a configuration of the object in an overlay fashion.

In recent field-effect transistors (FETs) having small gate length, carriers (electrons or holes) may be accelerated by a strong electric field to such an extent that the internal recombination of the carriers occurs to cause emission of a photon. Carriers in such a state are called "hot carriers". There are some papers reporting the detection of light emission by the hot carriers, though it is very weak.

It is also known that very faint light is emitted in the process of dielectric breakdown of an oxide film. In recent MOS integrated circuits, a voltage of typically 3 V or 5 V is applied across a gate oxide thin film of several hundreds of angstroms in thickness. Therefore, the resultant high electric field across the gate oxide film, which reaches several megavolts/cm, may cause dielectric breakdown of the gate oxide thin film and very faint light is emitted in the breakdown process.

To locate a faint light emitting point in the object, it is necessary to obtain a combined image in which an accumulated image of the faint light is displayed over an image of a configuration of the object. To this end, an image processing apparatus as shown in Fig. 2 has conventionally been used (see US-A-4 680 635). Faint light emitted from a faint light emitting object, which ranges from visible light to infrared light, is imaged on an image intensifier by an optical microscope. The formed image is then converted into a television signal by a television camera. The image data thus obtained is accumulated over a long period of time by an accumulation image memory circuit 1, and the accumulated image data is stored therein. The object is externally illuminated to gather image data of the object configuration, and the resultant image data is stored into a configuration image memory circuit 2. The accumulation image data and the configuration image data are superposed on each other by an image superposing circuit 3, and the superposed image is displayed in an overlay fashion by a display device 4.

Thus, in the conventional image processing apparatus, the faint light image and the configuration image are stored in separate memory circuits in advance at different times, and thereafter the two images are superposed on each other. Therefore, it is impossible to observe a light emitting process of the faint light and a light emitting location in the object in real time. Further, it takes much time to obtain the superposed image.

According to this invention an image processing apparatus comprises:
high-sensitivity image pickup means for picking up, as a two-dimensional pattern, an image of faint light emitted from an object to produce faint light image data, and picking up an image of light reflected by the object when illuminated by external illuminating means to produce configuration image data representing the external form of the object;
accumulating means for accumulating and storing the faint light image data;
configuration image memory means for storing the configuration image data;
image superposing means for superposing the accumulated faint light image data from the accumulating means on the configuration image data from the configuration image memory means; and,
display means for displaying a superposed image of the faint light image and the configuration image resulting from the superposed image data from the image superposing means;
is characterised in that the accumulating means is arranged to provide an output which is updated upon each accumulating operation by adding the subsequent faint light image data to the output, and in that the image superposing means is arranged to superpose successively the most recently updated output of the accumulating means on the configuration image data so that, in use, the display means displays the build-up of the faint light image in real time during an observation period.

With such an arrangement, the faint light emitting object is illuminated by the external illuminating means, and sensitivity of the high-sensitivity image pickup means is lowered. Under this condition, the high-sensitivity image pickup means produces the configuration image data of the object. The configuration image data thus obtained is stored in the configuration image memory means. Even if the configuration image data is applied to the accumulation means, it is not stored in the faint light image memory means. Then, the external illuminating means is turned off, and the sensitivity of the high-sensitivity image pickup means is adjusted to its highest sensitivity so that it can operate in the photon-counting mode. The faint light emitted from the object is picked up by the high-sensitivity image pickup means, in which the image pickup means counts photons one by one in a two-dimensional manner, thereby to detect the faint light image as a two-dimensional pattern. The faint light image data is accumulated by and stored in the accumulating means. The faint light image data thus accumulated and the stored configuration image data are superposed on each other in the image superposing means, and the superposed image is successively displayed in the display device based on the superposed image data. One can observe the faint light image which progressively changes while being accumulated, and can identify a location of the object where emission of the faint light occurs, in a real time manner.

A particular embodiment of an apparatus in accordance with this invention will now be described with reference to the accompanying drawings; in which:-
Fig. 1 is a block diagram showing an embodiment of an image processing apparatus according to the present invention; and,
Fig. 2 is a block diagram showing a conventional image processing apparatus.

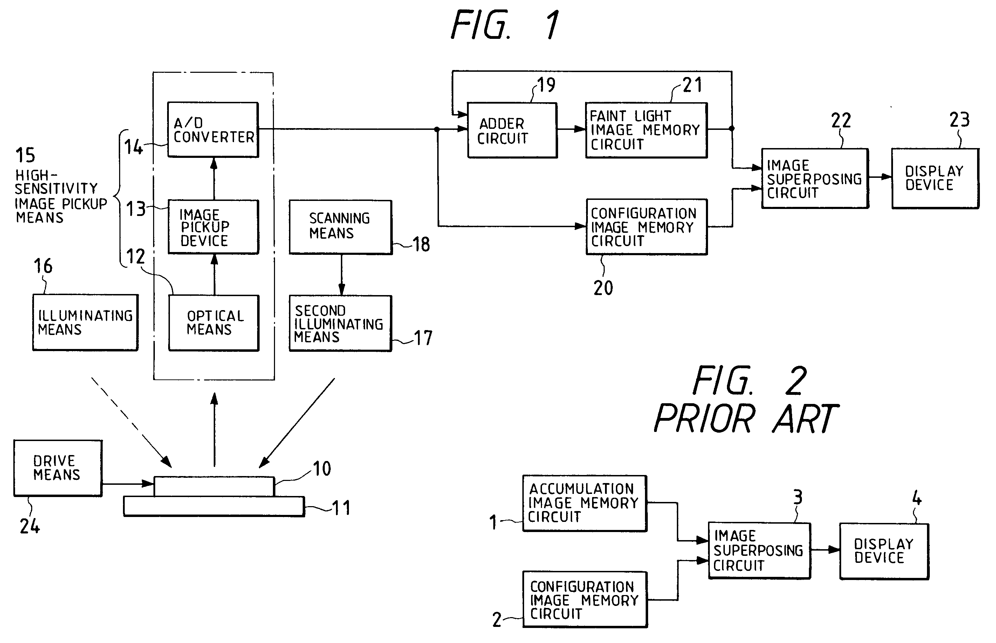

An embodiment of an image processing apparatus according to the present invention will be described with reference to Fig. 1.

A faint light emitting object 10 is, for example, a semiconductor device, to which a driving power or driving signals are supplied from an external drive means 24. Under a strong internal electric field, hot carriers are converted into photons, i.e., very faint light. The object 10 may be of any other type whose light emitting mechanism is different from the above one. The object 10 is placed on a table 11 which is movable to an inspection position. An optical means 12 is provided adjacent to the object 10. The optical means includes an optical microscope for collecting very faint light emitted from the object 10, a macro lens, etc. A photocathode of an image pickup device 13 for converting an optical signal into an electrical signal is provided in an image forming plane of the optical means 12. The image pickup device 13 may be a so-called two-dimensional photon-counting tube which two-dimensionally detects light in terms of a photon as a quantum of light (one photon by one photon). The sensitivity of the two-dimensional photon-counting tube is adjusted such that reflected light from the object 10 under illumination is detected at lower sensitivity and very faint light emitted from the object 10 is detected at higher sensitivity. The image pickup device 13 is coupled at the output with an A/D converter 14 for converting the analog electrical signal to a digital signal. The optical means 12, the image pickup device 13 and the A/D converter 14 make up a high-sensitivity image pickup means 15. An illuminating means 16 is located adjacent to the object 10, and is used when image data of a configuration (external form) of the object 10 is produced. If desired, there may be provided another illuminating means 17 for illuminating the object 10 with a light beam of a specific wavelength, and a scanning means 18 for effecting the scanning by the light beam of the specific wavelength, to analyze light emitted from the object 10 in response to the illumination by the second illuminating means 17.

The high-sensitivity image pickup means 15 is coupled at the output with both of an adder circuit 19 and a configuration image memory circuit 20. The adder circuit 19 is coupled with a faint light image memory circuit 21. The output of the memory circuit 21 is fed back to the input side of the adder circuit 19. Both the memory circuits 21 and 22 are connected to an image data superposing circuit 22, which is then connected to a display device 23.

In operation, the faint light emitting object 10 is first illuminated by the illuminating means 16. Light reflected from the object 10 is processed by the high-sensitivity image pickup means 15; first, the light is collected by the optical means 12 and imaged on the image pickup device 13 whose sensitivity is lowered in this mode, and then the analog signal output from the image pickup device 13 is converted into a digital signal as configuration image data by the A/D converter 14.

This configuration image data is stored into the configuration image memory circuit 20. The same data is also transferred to the adder circuit 19, but is not stored in the faint light image memory circuit 21.

After gathering of the configuration image data is completed, the illuminating means 16 is turned off, and the image pickup means 15 operates to detect very faint light from the object 10. In this mode of detecting the very faint light, the sensitivity of the image pickup device 13 is adjusted to its highest condition. The faint light thus detected is also subjected to the A/D conversion, and the converted signal is applied through the adder circuit 19 to the faint light image memory circuit 21. The stored data is fed back to the adder circuit 19, and is added to the subsequent faint image data. The faint light image data resulting from such repeated addition is transferred, together with the configuration image data, to the image data superposing circuit 22 every time the addition is performed. The two image data are superposed on each other in the image data superposing circuit 22. The display device 23 displays the superposed image and an accumulating process of the faint light image in real time.

As seen from the foregoing description, an accumulating process of a faint light image from a faint light emitting object can be displayed together with a configuration image of the object in an overlay fashion. Accordingly, one can observe in real time a location in the object where very faint light is being emitted, and a process of the light emission.

In a defect analysis of semiconductor devices, for example, a very faint light emission by hot carriers or a light emission due to dielectric breakdown of a gate oxide film is additively displayed being overlaid on a pattern image of an IC. By carefully observing such dynamic overlay images, it is possible to quickly recognize a light emitting process and to identify a light emitting location or defective location of the device. In another application to biology, very weak light which is emitted in such a process that active oxygen emitted when white blood cells capture bacteria react with luminol added to an external liquid, is additively displayed on a configuration image as previously obtained by illuminating an object. In such a manner, how white blood cells capture bacteria can be observed in real time.

## Claims

1. An image processing apparatus comprising:
high-sensitivity image pickup means (15) for picking up, as a two-dimensional pattern, an image of faint light emitted from an object (10) to produce faint light image data, and picking up an image of light reflected by the object (10) when illuminated by external illuminating means (16) to produce configuration image data representing the external form of the object (10);
accumulating means (19, 21) for accumulating and storing the faint light image data;
configuration image memory means (20) for storing the configuration image data;
image superposing means (22) for superposing the accumulated faint light image data from the accumulating means on the configuration image data from the configuration image memory means (20); and,
display means (23) for displaying a superposed image of the faint light image and the configuration image resulting from the superposed image data from the image superposing means;
characterised in that the accumulating means (19, 21) is arranged to provide an output which is updated upon each accumulating operation by adding the subsequent faint light image data to the output, and in that the image superposing means ( 22) is arranged to superpose successively the most recently updated output of the accumulating means (19, 21) on the configuration image data so that, in use, the display means (23) displays the build-up of the faint light image in real time during an observation period.

2. An apparatus according to claim 1, wherein the accumulating means comprises an adder means (19) for adding input faint light image data to preceding faint light image data, and faint light image memory means (21) for storing the added faint light image data and feeding back the stored faint light image data to the adder means (19) as the preceding faint light image data.

3. An apparatus according to claim 1 or 2, where the high-sensitivity image pickup means (15) comprises optical means (12) for collecting light from the object (10) and forming an image of the collected light, a two-dimensional photon-counting tube (13) for detecting the formed image as the two-dimensional pattern and producing an analog electrical signal representing the detected image, and an A/D converter (14) for converting the analog electrical signal to a digital signal as the faint light image data or the configuration image data.

4. An apparatus according to claim 3, wherein the optical means (12) comprises an optical microscope and macro lens.

5. An apparatus according to any one of the preceding claims, further comprising means (11, 24) for positioning the object (10) with respect to the high-sensitivity image pickup means.

6. An apparatus according to any one of the preceding claims, further comprising another illuminating means (17) for scanning the object (10) with illumination light having a predetermined wavelength.

7. A method of monitoring the faint light emitted from a semi-conductor device due to recombination of hot carriers using an image processing apparatus according to any of the preceding claims.

## Patentansprüche

1. Bildverarbeitungsvorrichtung, die umfaßt:
eine hochempfindliche Bildabtasteinrichtung (15), die ein Bild aus schwachem Licht, das von einem Objekt (10) abgestrahlt wird, als ein zweidimensionales Muster abtastet, um Schwachlichtbilddaten zu erzeugen, und die ein Bild des Lichts abtastet, das durch das Objekt (10) reflektiert wird, wenn dieses von einer äußeren Beleuchtungseinrichtung (16) beleuchtet wird, um Strukturbilddaten zu erzeugen, die die äußere Form des Objekts (10) darstellen;
eine akkumulierende Einrichtung (19,21), die die Schwachlichtbilddaten akkumuliert und speichert;
eine Strukturbild-Spelchereinrichtung (20), die die Strukturbilddaten speichert;
eine Bildüberlagerungseinrichtung (22), die die akkumulierten Schwachlichtbilddaten von der akkumulierenden Einrichtung über die Strukturbilddaten von der Strukturbild-Speichereinrichtung (20) legt, und
eine Darstellungseinrichtung (23), die ein überlagertes Bild des Schwachlichtbildes und des Strukturbildes darstellt, das sich aus den überlagerten Bilddaten von der Bildüberlagerungseinrichtung ergibt;
dadurch gekennzeichnet, daß die akkumulierende Einrichtung (19,21) eingerichtet ist, um einen Ausgang zu erzeugen, der nach jedem Akkumulationsvorgang aktualisiert wird, indem die nachfolgenden Schwachlichtbilddaten dem Ausgang hinzugefügt werden, und dadurch, daß die Bildüberlagerungseinrichtung (22) eingerichtet ist, um den zuletzt aktualisierten Ausgang der akkumulierenden Einrichtung (19,21) der Reihe nach über die Strukturbilddaten zu legen, so daß im Betrieb die Darstellungseinrichtung (23) den Aufbau des Schwachlichtbildes während einer Beobachtungsperiode in Echtzeit darstellt.

2. Vorrichtung nach Anspruch 1, bei der die akkumulierende Einrichtung eine Additionseinrichtung (19), die eingegebene Schwachlichtbilddaten zu vorangehenden Schwachlichtbilddaten addiert, und eine SchwachlichtbildSpeichereinrichtung (21) umfaßt, die die addierten Schwachlichtbilddaten speichert und die gespeicherten Schwachlichtbilddaten als die vorangehenden Schwachlichtbilddaten in die Additionseinrichtung (19) zurückführt.

3. Vorrichtung nach Anspruch 1 oder 2, worin die hochempfindliche Bildabtasteinrichtung (15) eine optische Einrichtung (12), die Licht von dem Objekt (10) sammelt und ein Bild des gesammelten Lichts formt, eine zweidimensionale Photonenzählröhre (13), die das geformte Bild als das zweidimensionale Muster erfaßt und ein elektrisches Analogsignal erzeugt, das das erfaßte Bild darstellt, und einen A/D-Umsetzer (14) umfaßt, der das elektrische Analogsignal als die Schwachlichtbilddaten oder die Strukturbilddaten in ein Digitalsignal umsetzt.

4. Vorichtung nach Anspruch 3, bei der die optische Einrichtung (12) ein optisches Mikroskop und eine Makrolinse umfaßt.

5. Vorrichtung nach einem der vorangehenden Ansprüche, die weiter eine Einrichtung (11, 24) umfaßt, die das Objekt (10) in bezug auf die hochempfindliche Bildabtasteinrichtung positioniert.

6. Vorrichtung nach einem der vorangehenden Ansprüche, die weiter eine weitere Beleuchtungseinrichtung (17) umfaßt, um das Objekt (10) mit einem Beleuchtungslicht mit einer vorbestimmten Wellenlänge abzutasten.

7. Verfahren, um das von einem Halbleiter-Bauteil infolge der Rekombination von heißen Trägern emittierte schwache Licht unter Verwendung einer Bildverarbeitungsvorrichtung nach einem der vorangehenden Ansprüche zu überwachen.

## Revendications

1. Appareil de traitement d'images comprenant:
un moyen (15) de prise de vues à haute sensibilité pour effectuer la prise de vues, sous la forme d'un motif bidimensionnel, d'une image de lumière faible émise par un objet (10) afin de produire des données d'images de lumière faible, et effectuer la prise de vue d'une image de lumière réfléchie par l'objet (10) lorsqu'il est éclairé par un moyen (16) d'éclairement externe pour produire des données d'images de configuration représentant la forme externe de l'objet (10);
un moyen (19,21) d'accumulation pour accumuler et stocker les données d'images de lumière faible;
un moyen (20) à mémoire d'images de configuration pour stocker les données d'images de configuration;
un moyen (22) de superposition d'images pour superposer les données d'images de lumière faible accumulées provenant du moyen d'accumulation aux données d'images de configuration provenant du moyen (20) à mémoire d'images de configuration; et,
un moyen (23) d'affichage pour afficher une image superposée de l'image de lumière faible et l'image de configuration résultant des données d'images superposées provenant du moyen de superposition d'images;
caractérisé en ce que le moyen (19, 21) d'accumulation est conçu pour fournir une sortie qui est mise à jour lors de chaque opération d'accumulation par addition des données d'images de lumière faible suivantes à la sortie, et en ce que le moyen (22) de superposition d'images est conçu pour superposer successivement la sortie mise à jour le plus récemment du moyen (19, 21) d'accumulation aux données d'images de configuration, de sorte que, lors de l'utilisation, le moyen (23) d'affichage affiche l'accumulation de l'image de lumière faible en temps réel au cours d'une période d'observation.

2. Appareil selon la revendication 1, dans lequel le moyen d'accumulation comprend un moyen (19) additionneur pour additionner des données d'images de lumière faible d'entrée à des données d'images de lumière faible précédentes, et un moyen (21) à mémoire d'images de lumière faible pour stocker les données d'images de lumière faible additionnées, et renvoyer les données d'images de lumière faible stockées au moyen (19) additionneur en tant que les données d'images de lumière faible précédentes.

3. Appareil selon les revendications 1 ou 2, dans lequel le moyen (15) de prise de vues à haute sensibilité comprend un moyen (12) optique pour collecter la lumière provenant de l'objet (10) et former une image de la lumière collectée, un tube (13) bidimensionnel de comptage de photons pour détecter l'image formée en tant que le motif bidimensionnel et produire un signal électrique analogique représentant l'image détectée, et un convertisseur A/N (14) pour convertir le signal électrique analogique en un signal numérique en tant que les données d'images de lumière faible ou les données d'images de configuration.

4. Appareil selon la revendication 3, dans lequel le moyen (12) optique comprend un microscope optique et un macro-objectif.

5. Appareil selon l'une quelconque des revendications précédentes, comprenant en outre un moyen (11, 24) pour positionner l'objet (10) par rapport au moyen de prise de vues à haute sensibilité.

6. Appareil selon l'une quelconque des revendications précédentes, comprenant en outre un autre moyen (17) d'éclairement pour balayer l'objet (10) avec une lumière d'éclairement de longueur d'onde prédéterminée.

7. Procédé de contrôle de la lumière faible émise par un dispositif à semiconducteur du fait de la recombinaison de porteurs chauds, utilisant un appareil de traitement d'images selon l'une quelconque des revendications précédentes.
